# EUROPÄISCHE PATENTANMELDUNG

(11) **EP 3 978 173 A1**
(43) Veröffentlichungstag der Anmeldung: **06.04.2022**
(21) Anmeldenummer: 20199283.1
(22) Anmeldetag: 30.09.2020
(51) Int. Cl.: B23K 1/00, B23K 1/08, B23K 1/20, B23K 3/06, B23K 3/08

(54) **WELLEN- UND/ODER SELEKTIVLÖTENVERFAHREN UND -ANLAGE**

(71) Anmelder: Siemens Aktiengesellschaft, 80333 München (DE)
(72) Erfinder: Haugk, Michael, 09116 Chemnitz (DE); Kempe, Maik, 09221 Neukirchen (DE); Müller, Bernd, 16259 Falkenberg (DE); Wittreich, Ulrich, 16727 Velten (DE)

(57) **Zusammenfassung**

Diese Anmeldung betrifft dein Verfahren zum Wellen- und/oder Selektivlöten, eine Lötanlage, einen Lötrahmen (210) sowie ein Lötrahmen-System (21). Um ein verbessertes Verfahren zum Wellen- und/oder Selektivlöten anzugeben wird vorgeschlagen, dass zum Wellen- und/oder Selektivlöten in einer Lötanlage mit einer Lötwelle (280), die folgenden Schritte ausgeführt werden: Bereitstellen einer mit zumindest einem THT-Bauteil (120) bestückten Baugruppe (100) auf einem Lötrahmen (210) mit Aussparungen (220) für die Lötwelle (280), und Löten des zumindest einen THT-Bauteils (120) durch die Aussparung (220) mit der Lötwelle (280), wobei eine zur Lötwelle (280) ergänzende Heizleistung (P250) am zu lötenden Bauteil (120) eingebracht wird.

## Beschreibung

Die Erfindung betrifft ein Verfahren zum Wellen- und/oder Selektivlöten, eine Lötanlage, einen Lötrahmen sowie ein Lötrahmen-System.

Ein derartiges Verfahren kommt beispielsweise in der Elektronikmontage zum Einsatz. Dort werden beim Lötprozess für THT Bauelemente ("through-hole technology", auch Durchsteckmontage) bereits mit SMD-Bauelementen bestückte und gelötete Leiterplatten in einen Lötrahmen eingelegt und mit THT Komponenten bestückt. Diese Komponenten werden häufig durch Niederhalter für den Transport und beim folgenden Wellenlötprozess fixiert. Durch die hohe thermische Masse der Lötrahmen und Niederhalter und die Abschottung der Leiterplatte durch die Niederhalter sowie die Begrenzung der für Konvektion und Strahlung wirksamen Leiterplatten-Fläche und dadurch das nur die zu lötenden Bereiche freigestellt sind es ergibt sich die Herausforderung eines homogenen Wärmeeintrages in die Leiterplatte und die zu lötenden Bauelemente. Gerade größere Komponenten und solche mit hoher thermischer Masse (z. B. größere Spulen) oder nur geringer Freistellung in den Lötrahmen um die zu lötenden Anschlüsse sind bezüglich einer gleichmäßigen Temperaturverteilung kritisch. Eine unzureichende Temperaturverteilung vor dem eigentlichen Wellenlötprozess kann zu mangelndem Lotdurchstieg und damit Qualitätsproblemen führen.

Der Erfindung liegt die Aufgabe zugrunde, ein verbessertes Verfahren zum Wellen- und/oder Selektivlöten anzugeben.

Diese Aufgabe wird durch ein Verfahren mit den im Anspruch 1 angegebenen Merkmalen gelöst.

Das Verfahren zum Wellen- und/oder Selektivlöten in einer Lötanlage mit einer Lötwelle, umfasst dabei die Schritte:
- Bereitstellen einer mit zumindest einem THT-Bauteil bestückten Baugruppe auf einem Lötrahmen mit Aussparungen für die Lötwelle,
- Löten des zumindest einen THT-Bauteils durch die Aussparung mit der Lötwelle, wobei eine zur Lötwelle ergänzende Heizleistung am zu lötenden Bauteil eingebracht wird.

Die Lötwelle kann dabei eine breite Welle sein, die einen linienförmigen Bereich abdeckt und z. B. die gesamte Breite einer Leiterplatte abdeckt. Beim Selektivlöten ist die Welle eine "Miniatur-Welle" die in der Regel fingerförmig ist und so selektiv, durch gezieltes Abfahren der Aussparungen, einzelne Lötverbindungen erstellt.

Durch die Integration einer zusätzlichen Wärmeeinbringungsmöglichkeit und damit einhergehenden Heizleistung räumlich nahe an den Zielpositionen, d.h. an den zu lötenden Bauteilen, kann eine gleichmäßigere Temperaturverteilung realisiert werden. Dieses ist selektiv für kritische Komponenten möglich und erhöht somit die Qualität bei kritischen Bauteilen.

In einer weiteren Ausführungsform wird die Heizleistung mit einer im oder am Lötrahmen angeordneten Heizeinrichtung eingebracht. Die Heizeinrichtung kann dabei sowohl in den Lötrahmen integriert als auch unmittelbar am Lötrahmen angeordnet sein. Die Heizeinrichtung ist dabei vorzugsweise direkt, insbesondere unmittelbar, an den Aussparungen für die Bauelemente angeordnet. So kann das Einbringen der Heizleistung noch besser gesteuert werden.
in einer weiteren Ausführungsform wird die Heizleistung durch eine an einem Niederhalter des Lötrahmens angeordneten Heizeinrichtung bereitgestellt. Bieten sich vor allem Infrarotstrahler an, die zielgerichtet die entsprechenden Bauteile erwärmen können. Eine entsprechende Ansteuerung ist ebenso möglich.

In einer weiteren Ausführungsform wird die Heizleistung durch eine Heißgasquelle eingebracht. Diese Heißgasquelle ist vorzugsweise in der Lötanlage angeordnet.

Alle genannten Heizeinrichtungen sind untereinander problemlos kombinierbar und dementsprechend kompatibel. So kann beispielsweise die Heißgasquelle mit den in den Lötrahmen integrierten Heizeinrichtung kombiniert werden. Kombination der Heizeinrichtung bieten sich vor allem für besonders große und empfindliche Bauteile an, die besonders gleichmäßig erwärmt werden müssen.

In einer weiteren Ausführungsform wird die Heizleistung in Abhängigkeit von einem Kontakt der Lötwelle mit dem THT-Bauteil und/oder einer Position der Lötwelle bezüglich der Aussparung angesteuert. Die Heizleistung kann dabei zeitlich vor dem Kontakt der Lötwelle mit dem Bauteil zur Verfügung gestellt werden sodass eine Vortemperierung des Bauteils stattfindet. Die Heizleistung kann dabei weiterhin so bereitgestellt werden, dass das Bauteil bzw. der das Bauteil umgebende Bereich so temperiert ist, dass ein optimales Benetzen mit dem Lot möglich ist. Eine Temperatur, wie sie das Lot aufweist ist dabei möglich.

Die Heizleistung kann dabei ebenso abhängig von einer Position der Lötwelle bezüglich der Aussparung bzw. den Aussparungen angesteuert werden. In anderen Worten wird die Heizleistung dann bereitgestellt, wenn sich die Lötwelle der Aussparung nähert oder in Abhängigkeit von einem Abstand zur Aussparung und/oder zum Bauteil bzw. dessen Pins gesteuert.

In einer weiteren Ausführungsform wird die Heizleistung anhand einer Temperatur der Baugruppe und/oder des Lötrahmens eingestellt, insbesondere geregelt. Die Temperatur der Baugruppe kann dabei durch einen Sensor am Lötrahmen erfasst oder durch ein simulationsgestütztes Verfahren in Echtzeit ermittelt werden. Der Sensor am Lötrahmen kann dabei so positioniert sein, dass er die Temperatur der darauf liegenden Baugruppe erfasst. Auf Basis der Temperatur kann so eine Regelung bzw. eine Steuerung der Heizleistung erfolgen. Dies hat den Vorteil, dass insbesondere hochempfindlichen Bauteile, die keinesfalls mit zu hohen Temperaturen beaufschlagt werden dürfen, mit der optimalen Temperatur gelötet werden können.
die Aufgabe wird weiterhin durch einen Lötanlage zum Wellenlöten und oder Selektivlöten gelöst. Die Lötanlage ist dabei zum Selektivlöten oder zum Wellenlöten von Baugruppen ausgebildet, die zumindest mit einem THT-Bauteil bestückt sind.

Die Lötanlage weist dabei eine Einrichtung zum Erzeugen einer Lötwelle sowie einer Heizeinrichtung und/oder eine Schnittstelle zu einer Heizeinrichtung eines Lötrahmens auf. Die Heizeinrichtung ist dabei zum Bereitstellen einer zur Lötwelle ergänzenden Heizleistung am zu lötenden Bauteil ausgebildet. Sofern die Heizeinrichtung in der Anlage selbst angeordnet ist, so kann diese z. B. ein Heißgas bereitstellen, eine selektiv ausrichtbare Wärmequelle aufweisen wie ein Array von Infrarotstrahlern.

Wenn die verwendeten Lötrahmen selbst eine Heizeinrichtung aufweisen, so ist es vorteilhaft, wenn die Anlage eine Schnittstelle zu diesen Heizeinrichtungen aufweist, die die Heizeinrichtungen der Lötrahmen sowohl mit Energie versorgen als auch direkt eine Regelung der sich einstellenden Heizleistungen durchführen.

Die Aufgabe wird weiterhin durch einen Lötrahmen gelöst. Dieser ist zum Wellenlöten und oder zum Selektivlöten ausgebildet und weist Aussparungen für die THT-Bauteile beziehungsweise deren Anschlusspins auf. Die zu lötende Baugruppe liegt also in der Regel auf dem Lötrahmen auf und kann von diesem z. B. durch Haltevorrichtungen gehalten werden. Die THT-Bauteile sind auf der Baugruppe angeordnet und die Anschlusspins der THT-Bauteile ragen durch die Baugruppe in die Aussparungen hinein. Der Lötrahmen weist dabei weiterhin eine Heizeinrichtung auf, die so angeordnet ist, dass eine Heizleistung an zumindest einem THT-Bauteil bereitgestellt wird. Die Heizeinrichtung ist dabei insbesondere in dem Lötrahmen integriert, kann aber ebenso auf dem Lötrahmen angeordnet sein.

In einer weiteren Ausführungsform weist der Lötrahmen einen Temperatursensor auf. Der Temperatursensor ist dabei vorzugsweise in der Nähe der Aussparungen angeordnet, sodass ein möglichst genauer Temperatur Messwert bezüglich des Lötortes, also des THT-Bauteils und dessen Kontaktpins erfasst werden kann. Der Temperatursensor kann dabei drahtlos ausgestaltet sein. Es hat sich als besonders vorteilhaft herausgestellt, wenn die Heiz Einrichtung bereits eine Schnittstelle zur Anlage zur Spannungsversorgung der Heizeinrichtung aufweist, so kann der Temperatursensor ebenso über diese Schnittstelle mit der Anlage verbunden werden. Die Anlage kann so die Temperatur direkt erfassen und die Heizeinrichtung steuern bzw. regeln.

In einer weiteren Ausführungsform ist die Heizeinrichtung zumindest teilweise um ein oder mehrere der Aussparungen herum angeordnet. So kann die Heizleistung genau dort eingesetzt werden, wo die relevanten Bauteile angeordnet sind. Dabei können Heizwendel oder Heizschichten um die Aussparungen herum angeordnet werden. Die einzelnen Heizelemente für jede der Aussparungen können dabei separat ansteuerbar sein oder über eine einzige Steuerleitung gleichzeitig mit Spannung versorgt werden.

Die Aufgabe wird weiterhin durch ein Lötrahmen-System gelöst, das zum Wellen- und/oder Selektivlöten ausgebildet ist. Das Lötrahmen-System weist einen Lötrahmen und einen Niederhalter auf, wobei der Lötrahmen Aussparungen für THT-Bauteile aufweist und wobei der Niederhalter zumindest eine Heizeinrichtung aufweist, die so angeordnet ist, dass die Heizeinrichtung eine Heizleistung an zumindest einem THT-Bauteil bereitstellt.

Die Aufgabe wird weiterhin durch ein Lötrahmen-System gelöst, das zum Wellen- und/oder Selektivlöten ausgebildet ist. Das Lötrahmen-System weist einen Lötrahmen und einen Niederhalter auf, wobei der Lötrahmen Aussparungen für THT-Bauteile aufweist und wobei der Niederhalter zumindest ein Umlenkelement aufweist, das so ausgestaltet ist, dass ein Heißgas einer Heißgasquelle so umgelenkt wird, dass eine Heizleistung am THT-Bauteil bereitgestellt wird.

Im Folgenden wird die Erfindung anhand der in den Figuren dargestellten Ausführungsbeispiele näher beschrieben und erläutert. Es zeigen:
- FIG 1: eine erste Ausführungsform eines Lötrahmen-Systems,
- FIG 2: eine zweite Ausführungsform eines Lötrahmen-Systems,
- FIG 3: eine dritte Ausführungsform eines Lötrahmen-Systems und
- FIG 4: einen Lötrahmen in einer Ansicht von unten.

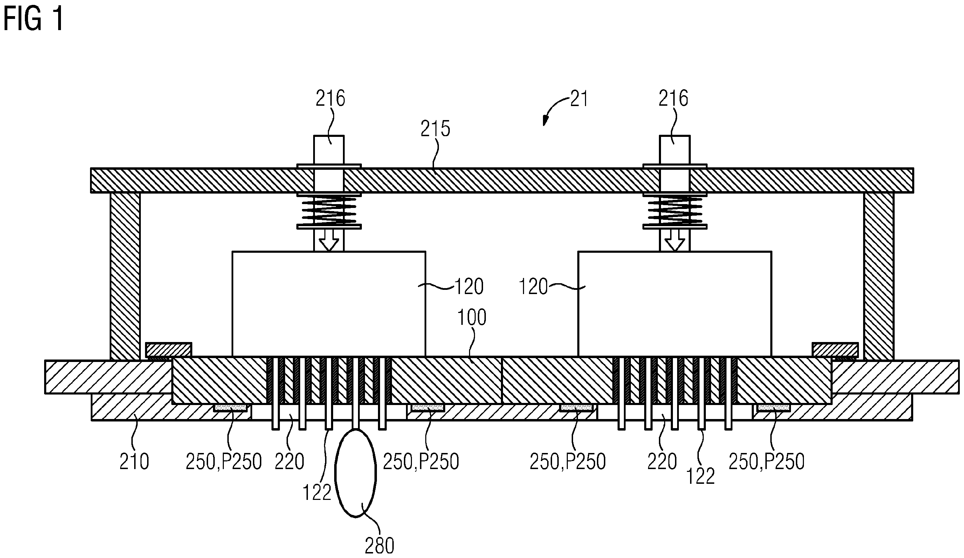

FIG 1 zeigt eine erste Ausführungsform eines Lötrahmen-Systems 21, das einen Lötrahmen 210 sowie einen Niederhalter 215 aufweist. Der Lötrahmen ist dabei so ausgebildet, dass eine Baugruppe 100 zum Wellen- und/oder Selektivlöten eingelegt werden kann. Die Baugruppe 100 weist THT-Bauteile 120 auf, deren Anschlusspins 122 sowohl durch die Baugruppe 100 hindurchragen als auch durch Aussparungen 220 im Lötrahmen 210 hindurch ragen. Im Rahmen des Lötprozesses soll nun durch eine Lötwelle 280 das THT-Bauteil 120 an die Baugruppe 100 gelötet werden.

Damit die THT-Bauteile 120 ihre Position halten weist eine auf dem Lötrahmen 210 aufgesetzter Niederhalter 215 Federelemente 216 auf, die einen Niederhalte-Druck auf die THT-Bauteile 210 ausüben.

Um einen optimalen Energieeintrag in die Lötstelle zu ermöglichen, weist der Lötrahmen 210 eine Heizeinrichtung 250 auf, die zur Bereitstellung einer Heizleistung P250 ausgebildet ist. Die Heizleistung P250 wird dabei zusätzlich zur durch die Lötwelle 280, bzw. durch das aufgeschmolzene Lot, bereitgestellten Heizleistung bereitgestellt. Die Heizelemente 250 sind im vorliegenden Fall zumindest teilweise um die Aussparung 220 herum angeordnet.

Da in FIG 1 ein Querschnitt gezeigt ist, kann es sich bei der Lötwelle 280 sowohl um eine kleine und z. B. Fingerförmige "Mini-Lötwelle" als auch um eine sich längs in die Bildebene hinein erstreckende Lötwelle handeln.

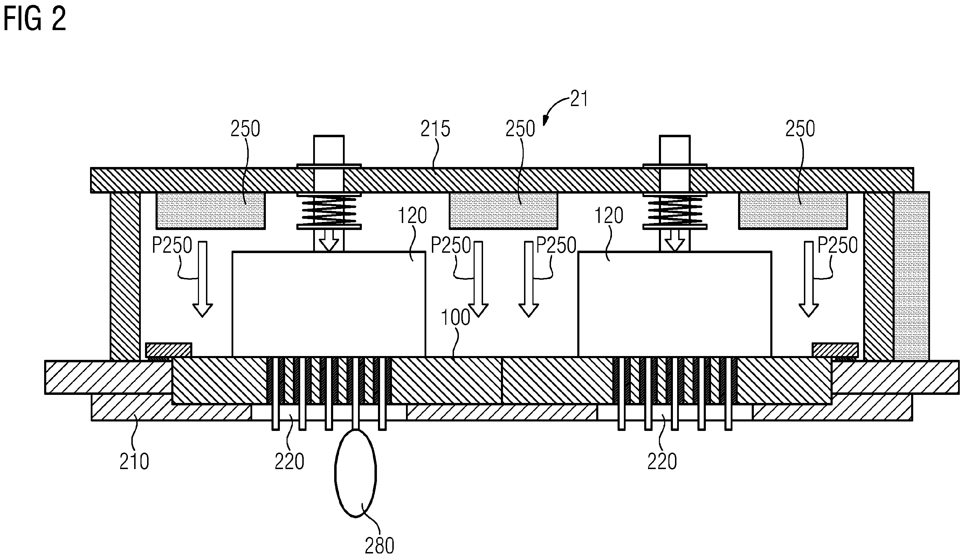

FIG 2 zeigt eine zweite Ausführungsform eines Lötrahmen-Systems 21 unter Verwendung der Bezugszeichen aus FIG 1. im vorliegenden Fall sind z.B. als Heizstrahler ausgebildete Heizelemente 250 im Niederhalter 215 angeordnet. Die Heizleistung P 52 kann also so von oberhalb des THT-Bauteils 120 auf die Lötstelle einwirken. Dies hat eine besonders gleichmäßige Durcherwärmung des THT-Bauteils 120 zur Folge. THT-Bauteils

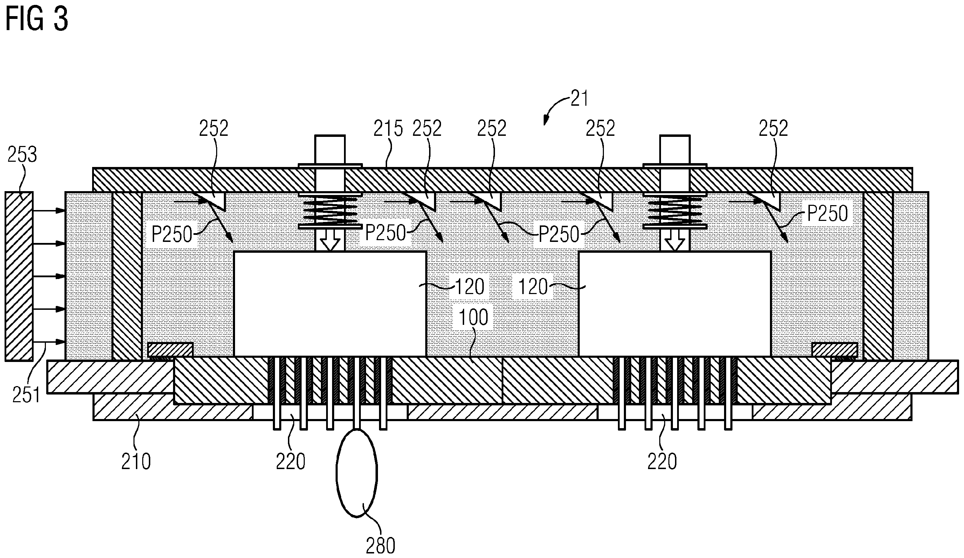

FIG 3 zeigt eine dritte Ausführungsform eines Lötrahmen-Systems 21 unter Verwendung der Bezugszeichen aus FIG 1 und FIG 2. eine Heizleistung P250 wird in FIG 3 durch ein Heißgas 251 bereitgestellt. Eine Heißgasquelle 253 kann das Heißgas 251 seitlich damit die Heizleistung P2 105 Orten ankommt, an denen sie benötigt wird, weist der Niederhalter 215 Umlenkelemente 252 auf, die so ausgerichtet und angeordnet sind, dass der Heißgas-Strom und damit das Heißgas 251 in Richtung der THT-Bauteile 120 und deren Lötstellen gelenkt wird, sodass die Lötstelle einen verbesserten Temperatureintrag erfährt.

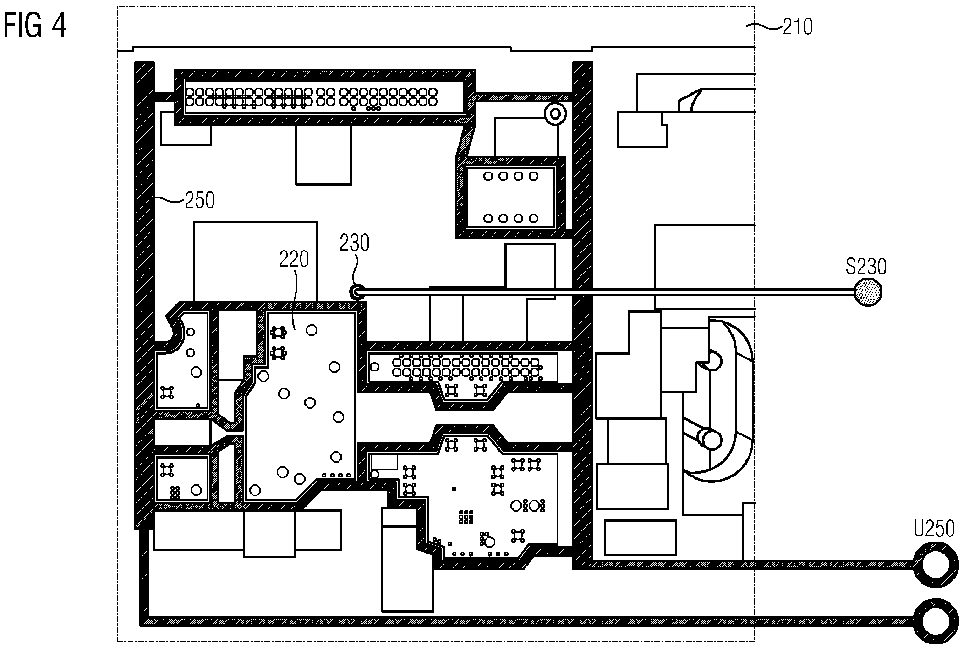

FIG 4 zeigt einen Lötrahmen 210 in einer Ansicht von unten. Zu sehen ist das um die Aussparungen 220 herum eine Heizeinrichtung 250 angeordnet ist. Die Heizeinrichtung 250 kann dabei eine in den Lötrahmen 210 integrierte Heizschicht sein. Die Heizeinrichtung 250 wird dabei durch eine Schnittstelle U250 mit Spannung versorgt. Über die Schnittstelle U250 kann eine Steuerung der von der Heizeinrichtung 250 abgegebenen Heizleistung P250 erfolgen. Immerhin weist der Lötrahmen einen Temperatursensor 230 auf. Der Sensor 230 kann dabei in den Lötrahmen 210 integriert sein, oder zwischen dem Lötrahmen und der durch die Aussparungen sichtbaren Baugruppe 100 bzw. der Leiterplatte der Baugruppe 100 angeordnet sein.

Zusammenfassend betrifft die Erfindung ein Verfahren zum Wellen- und/oder Selektivlöten, eine Lötanlage, einen Lötrahmen (210) sowie ein Lötrahmen-System (21). Um ein verbessertes Verfahren zum Wellen- und/oder Selektivlöten anzugeben wird vorgeschlagen, dass zum Wellen- und/oder Selektivlöten in einer Lötanlage mit einer Lötwelle (280), die folgenden Schritte ausgeführt werden:
- Bereitstellen einer mit zumindest einem THT-Bauteil (120) bestückten Baugruppe (100) auf einem Lötrahmen (210) mit Aussparungen (220) für die Lötwelle (280),
- Löten des zumindest einen THT-Bauteils (120) durch die Aussparung (220) mit der Lötwelle (280), wobei eine zur Lötwelle (280) ergänzende Heizleistung (P250) am zu löten-den Bauteil (120) eingebracht wird.

### Bezugszeichen

- 100: Baugruppe
- 120: THT-Bauteil

- 21: Lötrahmen-System
- 210: Lötrahmen
- 215: Niederhalter
- 220: Aussparungen im Lötrahmen
- 230: Temperatursensor
- S230: Signalkontakt Temperatursensor

- 250: Heizeinrichtung
- P250: Heizleistung der Heizeinrichtung
- U250: Spannungsversorgung Heizeinrichtung

- 251: Heißgas
- 252: Umlenkelement
- 253: Heißgasquelle

- 280: Lötwelle

## Patentansprüche

1. Verfahren zum Wellen- und/oder Selektivlöten in einer Lötanlage mit einer Lötwelle (280), umfassend die Schritte:
- Bereitstellen einer mit zumindest einem THT-Bauteil (120) bestückten Baugruppe (100) auf einem Lötrahmen (210) mit Aussparungen (220) für die Lötwelle (280),
- Löten des zumindest einen THT-Bauteils (120) durch die Aussparung (220) mit der Lötwelle (280), wobei eine zur Lötwelle (280) ergänzende Heizleistung (P250) am zu lötenden Bauteil (120) eingebracht wird.

2. Verfahren nach Anspruch 1, wobei die Heizleistung (P250) durch eine im Lötrahmen (210) angeordnete Heizeinrichtung (250), insbesondere eine Heizschicht, bereitgestellt wird.

3. Verfahren nach Anspruch 1 oder 2, wobei die Heizleistung (P250) durch eine an einem Niederhalter (215) angeordnete Heizeinrichtung (250) bereitgestellt wird.

4. Verfahren nach einem der vorhergehenden Ansprüche, wobei die Heizleistung (P250) durch eine Heißgasquelle (253) in der Lötanlage bereitgestellt wird.

5. Verfahren nach einem der vorhergehenden Ansprüche, wobei die Heizleistung (P250) in Abhängigkeit von einem Kontakt der Lötwelle (280) mit dem THT-Bauteil (120) angesteuert wird.

6. Verfahren nach einem der vorhergehenden Ansprüche, wobei die Heizleistung (P250) in Abhängigkeit von einer Position der Lötwelle bezüglich der Aussparung (220) angesteuert wird.

7. Verfahren nach einem der vorhergehenden Ansprüche, wobei die Heizleistung (P250) anhand einer Temperatur der Baugruppe und/oder des Lötrahmens (210) eingestellt, insbesondere geregelt wird.

8. Lötanlage zum Wellen- und/oder Selektivlöten von mit zumindest einem THT-Bauteil (120) bestückten Baugruppen (100) gemäß einem Verfahren nach einem der Ansprüche 1 bis 5, aufweisend eine Einrichtung zum Erzeugen einer Lötwelle (280) sowie eine Heizeinrichtung (250) und/oder eine Schnittstelle zu einer Heizeinrichtung (250) eines Lötrahmens (210), wobei die Heizeinrichtung (250) zum Bereitstellen einer zur Lötwelle (280) ergänzenden Heizleistung (P250) am zu lötenden Bauteil (120) ausgebildet ist.

9. Lötrahmen (210) zum Wellen- und/oder Selektivlöten gemäß einem Verfahren nach einem der Ansprüche 1 bis 5, aufweisend Aussparungen (220) für THT-Bauteile (120) und zumindest eine insbesondere in den Lötrahmen (210) integrierte Heizeinrichtung (250), die so angeordnet ist, dass die Heizeinrichtung (250) eine Heizleistung (P250) an zumindest einem THT-Bauteil (120) bereitstellt.

10. Lötrahmen nach Anspruch 8, ferner aufweisend einen Temperatursensor (230).

11. Lötrahmen nach Anspruch 8 oder 9, wobei die Heizeinrichtung (250) zumindest teilweise um ein oder mehrere der Aussparungen (220) herum angeordnet ist.

12. Lötrahmen-System (21) ausgebildet zum Wellen- und/oder Selektivlöten nach einem Verfahren nach einem der Ansprüche 1 bis 5, aufweisend einen Lötrahmen (210) und einen Niederhalter (215), wobei der Lötrahmen (210) Aussparungen (220) für THT-Bauteile (120) aufweist und wobei der Niederhalter (215) zumindest eine Heizeinrichtung (250) aufweist, die so angeordnet ist, dass die Heizeinrichtung (250) eine Heizleistung (P250) an zumindest einem THT-Bauteil (120) bereitstellt.

13. Lötrahmen-System (21) ausgebildet zum Wellen- und/oder Selektivlöten nach einem Verfahren nach einem der Ansprüche 1 bis 5, aufweisend einen Lötrahmen (210) und einen Niederhalter (215), wobei der Lötrahmen (210) Aussparungen (220) für THT-Bauteile (120) aufweist und wobei der Niederhalter (215) zumindest ein Umlenkelement (252) aufweist, das so ausgestaltet ist, dass ein Heißgas (251) einer Heißgasquelle (253) so umgelenkt wird, dass eine Heizleistung (P250) am THT-Bauteil bereitgestellt wird.
